# EUROPÄISCHE PATENTANMELDUNG

(11) **EP 4 230 048 A1**
(43) Veröffentlichungstag der Anmeldung: **23.08.2023**
(21) Anmeldenummer: 22157631.7
(22) Anmeldetag: 18.02.2022
(51) Int. Cl.: A23B 4/005, A22C 18/00, A23B 4/03, A23L 3/3454, A23L 13/70

(54) **VERFAHREN UND VORRICHTUNG ZUR DURCHFÜHRUNG EINES REIFEPROZESSES VON WURSTWAREN**

(71) Anmelder: Albeck, Antje, 66646 Marpingen Saarland (DE)
(72) Erfinder: Albeck, Antje, 66646 Marpingen Saarland (DE)
(74) Vertreter: Patentanwaltskanzlei Vièl & Wieske PartGmbB

(57) **Zusammenfassung**

Die vorliegende Erfindung betrifft ein Verfahren zur Durchführung eines Reifeprozesses von Wurstwaren. Es werden ein Reifeschrank (1) und ein Dampferzeuger (8) verwendet. Die Wurstwaren befinden sich zur Durchführung des Reifeprozesses in dem Reifeschrank (1). Der Reifeschrank (1) ist mit dem Dampferzeuger (8) derart gekoppelt (9, 7), dass eine Dampfzufuhr in den Reifeschrank (1) erfolgen kann, indem von dem Dampferzeuger (8) erzeugter Wasserdampf in den Reifeschrank (1) einströmen kann. Der Reifeschrank (1) weist einen Temperatursensor (2) auf zur Messung der Temperatur im Inneren des Reifeschrankes. Die Durchführung des Reifeprozesses wird geregelt. Nach der vorliegenden Erfindung ist der Dampferzeuger (8) außerhalb des Reifeschrankes (1) angeordnet. Die Stellgröße der Regelung ist die Zufuhr von Wasserdampf aus dem Dampferzeuger (8) in den Reifeschrank (1). Die Führungsgröße der Regelung ist ein Sollwert der Temperatur des Temperatursensors (2), wobei bei einem oberen Wert als Messwert des Temperatursensors (2) die Dampfzufuhr in den Reifeschrank (1) unterbrochen wird und wobei bei einem unteren Wert als Messwert des Temperatursensors (2) die Dampfzufuhr in den Reifeschrank (1) vollständig geöffnet wird. Die Erfindung betrifft außerdem eine Vorrichtung zur Durchführung des Verfahrens.

## Beschreibung

Die vorliegende Erfindung betrifft ein Verfahren zur Durchführung eines Reifeprozesses von Wurstwaren nach dem Oberbegriff des Anspruchs 1 sowie eine Vorrichtung zur Durchführung des Verfahrens gemäß Anspruch 5.

Aus der DE 201 10 527 U1 ist ein Reifeschrank bekannt, der einen Wasservorratsbehälter umfasst. Der Reifeprozess in dem Reifeschrank wird durchgeführt, indem das Wasser in dem Wasservorratsbehälter auf eine definierte Temperatur geregelt wird.

Aus der DE 1 085 025 B ist es bekannt, in einem dicht verschlossenen Kasten gelagerte Wurst durch gleichzeitige Kühlung und Heizung sowie die dadurch bewirkte Umwälzung der im Kasten befindlichen Luft bei einer Temperatur von etwa 8 °C bis 10 °C laufend Feuchtigkeit zu entziehen. Es ist beschrieben, dass die Feuchtigkeit an einen Kühlkörper abgegeben wird, von dem sie dann als Kondenswasser nach außen fließt. Die relative Feuchtigkeit der Umwälzluft soll wenigstens zeitweise auf einen Wert, beispielsweise etwa 70 % bis 85 %, gebracht werden. Dadurch soll eine Oberflächentrocknung der Wurst verhindert werden. Es ist beschrieben, dass dazu die Kältezufuhr jeweils bei einer Temperatur der Umwälzluft von etwa 8 °C bis 9 °C abgeschaltet und dann nach einer kurzen Lufterwärmungsperiode, während der ein Teil der vorher der Rohwurst entzogenen Feuchtigkeit als Kondenswasser abfließt, bei erfolgter Temperaturerhöhung um etwa 1 °C wieder eingeschaltet werden kann. Die relative Luftfeuchtigkeit soll dabei um etwa 20 % bis 25 % schwanken. Es ist beschrieben, dass sich dieser Vorgang etwa folgendermaßen abspielen soll: Wenn die Rohwurst in den Kasten eingebracht ist, wird dieser dicht verschlossen. Eine Kühlmaschine, eine Heizeinrichtung und ein Ventilator werden in Tätigkeit gesetzt. Ein Thermostat wird so eingestellt, dass er die Kühlmaschine etwa bei 10 °C einschaltet und bei 9 °C wieder ausschaltet. Eine verhältnismäßig große Kühlplatte soll aus der durch den Ventilator rasch bewegten Kastenluft in kurzer Zeit (etwa 10 Minuten) einen beträchtlichen Teil der Feuchtigkeit absorbieren. Dabei soll sich die Feuchtigkeit in Form von Eiskristallen an der Kühlplatte niederschlagen. Die relative Luftfeuchtigkeit im Kasten soll dadurch um etwa 20 % sinken. Es ist weiter beschrieben, dass bei einer längeren Dauer dieses rasch trocknenden Zustands eine unerwünschten Oberflächentrocknung eintreten würde. Dies soll dadurch vermieden werden, dass der Thermostat die Kühlmaschine bei 9 °C wieder ausschaltet. Die Kondenswasserkristalle sollen dabei durch die bleibend eingeschaltete Heizeinwirkung während einer Zeit von etwa 2 Minuten abschmelzen. Ein Teil des entstehenden Kondenswasser wird nach außen abgeleitet. Dabei soll der andere Teil von der sich bewegenden und wieder erwärmten Luft aufgenommen und der Oberfläche der Rohwurst zugeführt werden. Die Oberfläche der Wurst soll dadurch wieder feuchter werden und feuchtigkeitsdurchlässig, also atmungsfähig, bleiben. Dies soll auch damit zusammenhängen, dass die relative Luftfeuchtigkeit im Kasten neuerlich um etwa 20 % ansteigt. Während dieser Feuchtigkeitszufuhr an die Kastenluft und die Rohwurst soll die Temperatur im Kasten wieder auf etwa 10 °C ansteigen. Durch die Thermostatsteuerung erfolgt erneut eine Kältezufuhr. Die Periode des raschen Feuchtigkeitsentzuges soll sich dadurch wiederholen. Die Periode des Feuchtigkeitsentzuges aus dem Kern der Rohwurst und die Periode der Feuchtigkeitszufuhr an die äußeren Wurstschichten sollen sich durch diese Art der Regelung laufend ablösen. Dadurch soll nur die Feuchtigkeit, die aus dem Inneren der Wurst stammt, als Kondenswasser nach außen abgeleitet werden. Es wird als wesentlich herausgestellt, dass es sich um eine im Verhältnis zum Wurstvolumen verhältnismäßig geringe Luftmenge handelt, die nicht laufend durch Frischluft ersetzt wird. Dies soll wesentlich sein, damit der beschriebene rasche Wechsel der Perioden des Feuchtigkeitsentzuges und der Feuchtigkeitszufuhr sowie die erforderlichen Schwankungen der relativen Luftfeuchtigkeit erreichbar sind.

Aus der DE 10 2010 002 951 A1 ist es bekannt, einen Reifeprozess für eine Salami zu regeln, indem die Temperatur im Inneren eines Reifeschrankes geregelt wird. Außerdem ist ein Sensor für eine Messung des Drucks im Inneren des Reifeschrankes vorhanden. Bei dem Reifeprozess wird fortlaufend ein Unterdruck gegenüber dem Umgebungsdruck im Inneren des Reifeschrankes eingestellt.

Im Stand der Technik ist in der DE 10 2009 055 018 A1 angegeben, dass zur Herstellung einer Salami die Rohwurstmasse in Kunst- oder Naturdärme eingefüllt wird. Die gefüllten Rohwürste werden in Klimakammern oder Reiferäumen bei einer geregelten Temperatur, Luftfeuchtigkeit und Luftbewegung gereift. Dabei kann auch auch eine Räucherung des Produkts erfolgen. Als die bei der Reifung der Rohwurst wichtigsten Vorgänge sind die Umrötung, pH-Wert-Absenkung, Bindung, Trocknung und die Aromatisierung angegeben. Die einzelnen Vorgänge laufen nebeneinander und nacheinander ab und sind auch voneinander abhängig.

In der DE 20 2008 006 938 U1 ist für den Reifeprozess von Salami die Angabe enthalten, dass nach der Durchmischung in der Mischungs- und Zerkleinerungsvorrichtung, dem Kutter, die fertige Rohwurstmasse in einen wasserdampfdurchlässigen Darm abgefüllt und bei einer Temperatur von ca. 25 °C bis 27 °C mit gradueller Absenkung auf 16 °C bei einer Luftfeuchte zu Beginn des Reifungsprozesses von 98 % und zum Ende des Reifungsprozesses von 82 % relativer Luftfeuchte gereift bzw. fermentiert wird. Die Luftfeuchte wird während des Reifungsvorgangs schrittweise abgesenkt. Der Reifungsprozess dauert ca. 5 Tage.

Aus der DE 697 25 209 T2 ist es bekannt, den Reifeprozess durch den Einsatz von Mikrowellen zu beschleunigen.

Aus der DE 39 12 071 C2 ist es bekannt, einen Reifeprozess für Salami durchzuführen, indem die Salami im Hochvakuum temperaturbehandelt wird. Dadurch soll der Reife- und Trocknungsprozess durchgeführt werden.

Aus der DE 19 59 4349 A1 ist es bekannt, einen Reifeprozess für Salami durchzuführen, indem diese in einem klimatisierten Raum mit einer Luftumwälzung dem Reifeprozess uinterzogen wird. Dabei kommt es wesentlich auf ein bestimmtes Verhältnis zwischen der Temperatur und der Luftfeuchtigkeit an.

Aus der DE 28 35 645 A1 ist es bekannt, bei dem Reifeprozess der Salami diese zunächst 24 Stunden bei ca. 90 % Luftfeuchtigkeit und einer Temperatur von 24 °C umzuröten, um den Reifeprozess dann für weitere 24 Stunden bei ca. 80 % Luftfeuchtigkeit und 22 °C fortzusetzen. Die Aufbewahrung soll daran anschließend bei Temperaturen von 18 °C bis 20 °C und einer Luftfeuchtigkeit von 75 % erfolgen.

Der vorliegenden Erfindung liegt die Aufgabe zugrunde, ein Verfahren und eine Vorrichtung für einen Reifeprozess von Wurstwaren vorzuschlagen, die einfach umgesetzt werden können.

Diese Aufgabe wird durch ein Verfahren nach Anspruch 1 gelöst. Bei dem dort dargestellten Verfahren zur Durchführung eines Reifeprozesses von Wurstwaren wird ein Reifeschrank sowie ein Dampferzeuger verwendet. Die Wurstwaren befinden sich zur Durchführung des Reifeprozesses in dem Reifeschrank. Dieser Dampferzeuger ist derart mit dem Reifeschrank gekoppelt, dass eine Dampfzufuhr des in dem Dampferzeuger erzeugten Wasserdampfes in den Reifeschrank erfolgen kann. Der von dem Dampferzeuger erzeugte Wasserdampf kann dazu in den Reifeschrank einströmen. Der Reifeschrank weist einen Temperatursensor auf zur Messung der Temperatur im Inneren des Reifeschrankes. Die Durchführung des Reifeprozesses wird geregelt. Nach der vorliegenden Erfindung ist die Stellgröße der Regelung die Zufuhr von Wasserdampf in den Reifeschrank. Die Führungsgröße der Regelung ist ein Sollwert der Temperatur des Temperatursensors. Die Regelung ist so ausgestaltet, dass bei einem oberen Wert als Messwert des Temperatursensors die Dampfzufuhr in den Reifeschrank unterbrochen wird. Weiterhin ist die Regelung so ausgestaltet, dass bei einem unteren Wert als Messwert des Temperatursensors die Dampfzufuhr in den Reifeschrank vollständig geöffnet wird.

Der Vorteil dieses Verfahrens besteht gegenüber dem Stand der Technik darin, dass die Regelung sehr einfach aufgebaut ist und mit geringem technischen Aufwand umgesetzt werden kann.

Es hat sich gezeigt, dass sich durch den Wasserdampf, der in den Reifeschrank einströmt, in einfacher Weise die Temperatur in dem Reifeschrank mit einer für den Reifeprozess passenden Luftfeuchtigkeit einstellen lässt.

Durch das Absperren der Zufuhr von Wasserdampf bei einem oberen Wert der Temperatur wird vermieden, dass die Temperatur in dem Reifeschrank zu hoch wird. Vorteilhaft wird dieser obere Wert der Temperatur so eingestellt, dass in jedem Fall das Koagulieren (Gerinnen) von Eiweißen in der Wurst verhindert wird.

Durch das erneute Öffnen der Zufuhr von Wasserdampf, wenn die Temperatur im Inneren des Reifeschrankes auf den unteren Wert gesunken ist, wird erreicht, dass die Temperatur im Inneren des Reifeschrankes zwischen dem unteren Wert der Temperatur und dem oberen Wert der Temperatur bleibt.

Es hat sich außerdem gezeigt, dass sich mit dieser Vorgehensweise im Inneren des Reifeschrankes eine Luftfeuchtigkeit einstellt, die ein Austrocknen der Wurst (lediglich) an der Oberfläche verhindert.

Die Regelung nach Anspruch 1 umfasst beispielsweise eine Lösung, bei der die Menge an Wasserdampf, die pro Zeiteinheit in den Reifeschrank einströmt, bei dem unteren Wert der Temperatur einen Maximalwert annimmt, der dann kontinuierlich oder in Stufen geringer werden kann, bis die weitere Zufuhr von Wasserdampf bei Erreichen des oberen Wertes der Temperatur im Inneren des Reifeschrankes ganz abgeschaltet wird.

Die Zufuhr von Wärmeenergie in das Innere des Reifeschrankes erfolgt bei dieser Vorgehensweise also über das Zuführen des Wasserdampfes.

Bei der DE 201 10 527 U1 befindet sich der Wasservorratsbehälter im Inneren des Reifeschrankes. Das Wasser in dem Wasservorratsbehälter wird erhitzt. Dabei steigt Wasserdampf auf in den Reifeschrank. Im Unterschied zu der vorliegenden Erfindung erfolgt dort eine Erwärmung des Reifeschrankes von innen durch das warme Wasser in dem Wasservorratsbehälter. Die Luft in dem Reifeschrank ist in thermischer Wechselwirkung mit der Wasseroberfläche, so dass auch ohne das Aufsteigen von Wasserdampf die Temperatur im Inneren des Reifeschrankes durch das erwärmte Wasser geheizt wird. Dieses Aufheizen der Luft im Inneren des Reifeschrankes erfolgt wegen der Wärmekapazität des Wassers auch dann, wenn die Heizung des Wasservorratsbehälters bereits abgeschaltet ist.

Bei der vorliegenden Erfindung erfolgt die Erwärmung im Inneren des Reifeschrankes durch den zugeführten Wasserdampf, der seine Wärmeenergie teilweise ebenfalls an die Luft im Inneren des Reifeschrankes abgibt. Hierbei erfolgt eine unmittelbare Abschaltung des weiteren Aufheizens bei einem Schließen der Zufuhr des Wasserdampfes. Es lässt sich eine gute Präzision und Regelgeschwindigkeit der Temperatureinstellung erreichen, wenn der Verdampfer weiterhin in Betrieb bleibt, so dass beim erneuten Öffnen der Zufuhr von Wasserdampf unmittelbar bereits eine Menge an Wasserdampf zur Verfügung steht, die in den Reifeschrank einströmen kann.

Bei der Ausgestaltung des Verfahrens gemäß Anspruch 2 ist die Regelung eine Zweipunktregelung.

Damit lässt sich die Regelung mit einer sehr einfachen Ausgestaltung des Stellgliedes als ansteuerbares Schließelement umsetzen. Wenn die gemessene Temperatur im Inneren des Reifeschrankes den oberen Wert hat, wird das ansteuerbare Schließelement für die Einstellung der Menge des zugeführten Wasserdampfes geschlossen. Wenn die gemessene Temperatur im Inneren des Reifeschrankes den unteren Wert hat, wird das ansteuerbare Schließelement für die Einstellung der Menge des zugeführten Wasserdampfes vollständig geöffnet und bleibt in dieser vollständigen geöffneten Stellung, bis das ansteuerbare Schließelement wieder vollständig geschlossen wird, wenn die gemessene Temperatur im Inneren des Reifeschrankes wieder den oberen Wert erreicht.

Die Differenz zwischen dem oberen Wert der Temperatur und dem unteren Wert der Temperatur bestimmt die Hysterese dieser Zweipunktregelung.

Um keine zu großen Schwankungen in den Parametern für den Reifeprozess zu erhalten, hat es sich als zweckmäßig erwiesen, diese Differenz zwischen dem oberen Wert und dem unteren Wert nicht größer als 5 °C vorzusehen. Besonders vorteilhaft liegt diese Differenz zwischen 1 °C und 3 °C, dabei besonders vorteilhaft bei 2 °C. Es hat sich gezeigt, dass die klimatischen Verhältnisse des Reifeprozesses dabei ausreichend konstant sind. Die Abkühlzeiten während der Abschaltung der Zufuhr von Wasserdampf und die Aufwärmzeiten während des Öffnens der Zufuhr von Wasserdampf sind dabei dennoch so groß, dass kein ständiges Umschalten des Öffnens und Sperrens der Zufuhr von Wasserdampf mit einer zu hohen Frequenz auftritt. Dieser Effekt der Zweipunktregelung mit einer zu geringen Hysterese (Rattern) wird vorteilhaft vermieden.

Diese Zweipunktregelung lässt sich mit einem 2/2-Ventil als ansteuerbarem Schließelement realisieren.

Bei der Ausgestaltung des Verfahrens gemäß Anspruch 3 besteht der Dampferzeuger aus einem Gehäuse, in dem sich ein Wasserreservoir befindet. Weiterhin ist eine Heizvorrichtung vorhanden, über die das Wasser in dem Wasserreservoir zur Durchführung des Reifeprozesses auf eine Temperatur erhitzt wird, bei der eine Menge an Wasserdampf pro Zeiteinheit entsteht, die ausreichend ist für die Temperaturregelung des Reifeprozesses. Das Gehäuse weist oberhalb des Wasserreservoirs einen Aufnahmeraum für den entstehenden Wasserdampf auf. Der Aufnahmeraum ist zur Durchführung des Reifeprozesses mit einer Zuführöffnung in den Reifeschrank verbunden.

Das Wasser in dem Wasserreservoir kann insbesondere auf die Siedetemperatur erhitzt werden oder auf eine Temperatur, die lediglich geringfügig unter der Siedetemperatur liegt. Dies erweist sich insofern als vorteilhaft, weil damit bei einem Öffnen der Zufuhr von Wasserdampf in den Reifeschrank eine ausreichende Menge an Wasserdampf zur Verfügung steht, um die gewünschte Erwärmung in dem Reifeschrank zu erreichen. Wenn die Zuführöffnung in dem Reifeschrank im unteren Bereich des Reifeschrankes angeordnet ist, kann durch die Konvektion erreicht werden, dass der Wasserdampf bei geöffneter Zuführung in ausreichender Menge in den Reifeschrank strömt, auch wenn keine Fördervorrichtung für den Wasserdampf vorhanden ist. Eine solche Fördervorrichtung in Form einer Pumpe kann ggf. zusätzlich vorgesehen werden.

Die Verbindung des Aufnahmeraums des Behälters für den Wasserdampf ist mit der Zuführöffnung in dem Reifeschrank beispielsweise mittels eines Schlauches oder mittels eines Rohres verbunden. Um eine Kondensation des Wasserdampfes in dem Schlauch bzw. dem Rohr zu vermeiden, ist es vorteilhaft, wenn die Länge des Schlauches bzw. des Rohres nicht zu groß ist.

Bei der Ausgestaltung des Verfahrens gemäß Anspruch 4 sind die Wurstwaren in dem Reifeschrank während der Durchführung des Reifeprozesses freihängend gelagert.

Dies erweist sich insoweit als vorteilhaft, als diese damit optimal Feuchtigkeit nach allen Seiten abgeben können.

Das beschriebene Verfahren lässt sich vorteilhaft ausführen mit einer Vorrichtung, die einen Reifeschrank aufweist zur Durchführung eines Reifeprozesses von Wurstwaren. Die Vorrichtung weist außerdem einen Dampferzeuger auf zur Erzeugung von Wasserdampf. Dieser Dampferzeuger ist außerhalb des Reifeschrankes angeordnet. Der Dampferzeuger weist eine Zuführleitung auf, die von dem Dampferzeuger abgeht zu einer Zuführöffnung des Reifeschrankes. Weiterhin ist ein ansteuerbares Schließelement mit wenigstens zwei Betriebsstellungen vorhanden. In einer ersten, geschlossenen Betriebsstellung des Schließelementes ist die Dampfzufuhr von dem Dampferzeuger in die Reifekammer gesperrt. In einer zweiten, geöffneten Betriebsstellung des Schließelementes ist die Dampfzufuhr von dem Dampferzeuger in die Reifekammer geöffnet. Dem Reifeschrank ist ein Temperatursensor zugeordnet zur Messung der Temperatur im Inneren des Reifeschrankes. Die Vorrichtung weist außerdem eine Regeleinrichtung auf. Der Regeleinrichtung wird als Eingangssignal das Signal des Temperatursensors zugeführt. Die Regeleinrichtung ist so ausgestaltet, dass in der Regeleinrichtung dieses Eingangssignal mit einem Sollwert verglichen wird. Die Regeleinrichtung weist eine Signalausgabeeinheit auf, deren Ausgabesignal abhängig von dem Vergleich des Signals des Temperatursensors mit dem Sollwert erzeugt wird. Das Ausgabesignal der Regeleinrichtung wird als Ansteuersignal dem ansteuerbaren Schließelement zugeführt und bewirkt damit das Öffnen oder Schließen des ansteuerbaren Schließelementes.

Das ansteuerbare Schließelement ist zwischen dem Ausgang des Dampferzeugers und der Zuführöffnung des Reifeschrankes angeordnet und kann dabei insbesondere auch unmittelbar in den Ausgang des Dampferzeugers integriert sein oder in die Zuführöffnung des Reifeschrankes.

Diese Vorrichtung ist ohne großen technischen Aufwand herstellbar. Es wird lediglich der Dampferzeuger benötigt, der Reifeschrank mit einem Temperatursensor und eine Regeleinrichtung. Die Regeleinrichtung kann in der einfachsten Ausführung als Zweipunktregler ausgeführt sein.

Damit ist die Vorrichtung sowohl hinsichtlich des Platzbedarfs als auch hinsichtlich der Kosten so ausgestaltet, dass auch die Herstellung von Wurstwaren in geringeren Mengen rentabel durchführbar ist. Dies ist gerade für kleinere Metzgereien von Bedeutung, die eigene, selbst hergestellte Wurstwaren anbieten wollen.

Bei der Ausgestaltung der Vorrichtung gemäß Anspruch 6 ist der Regeleinrichtung eine Sollwertvorgabeeinrichtung zugeordnet, durch die eine Sollwertvorgabe einstellbar ist. Der Regeleinrichtung wird von der Sollwertvorgabeeinrichtung ein dieser Sollwertvorgabe entsprechendes Eingangssignal zugeführt. Die Regeleinrichtung ist so ausgestaltet, dass aus dieser Sollwertvorgabe ein oder mehrere Sollwerte abgeleitet werden zur Durchführung der Regelung des Reifeprozesses.

Aus der Sollwertvorgabe kann dann ein einzelner Sollwert abgeleitet werden, wenn die Regelung so aufgebaut ist, dass das Ausgabesignal mit einem bestimmten Zeitverhalten der Regelung (beispielsweise bei einer Konfiguration des Reglers als PI-, PID- oder PTₓ-Regler) direkt erzeugt wird, wenn der gemessene Wert der Temperatur von dem Sollwert abweicht.

Aus der Sollwertvorgabe werden beispielsweise bei der Zweipunktregelung mehrere (zwei) Sollwerte abgeleitet, die das Sperren der Zufuhr von Wasserdampf bei dem oberen Wert der gemessenen Temperatur sowie das Öffnen der Zufuhr von Wasserdampf bei dem unteren Wert der Temperatur betreffen. Die Sollwertvorgabe kann so gestaltet sein, dass der eingestellte Wert der Sollwertvorgabe unmittelbar dem oberen Wert entspricht. Damit wird für den Benutzer erkennbar die Temperatur so eingestellt, dass ein Überschreiten der Temperatur vermieden wird, bei dem die Eiweiße in der Wurst koagulieren (gerinnen). In der Regeleinrichtung kann eine Differenz fest vorgegeben sein, über die aus dem oberen Wert der gemessenen Temperatur (unmittelbar entsprechend dem eingestellten Sollwert) der untere Wert ermittelt wird, der dann um diese Differenz geringer ist als der obere Wert.

Ein sinnvoller Wert für die Einstellung des oberen Wertes der Temperatur kann beispielsweise bei 35 °C liegen. Damit ist noch ein Abstand zu der Temperatur gegeben, bei der Eiweiße in der Wurst koagulieren (gerinnen). Es hat sich gezeigt, dass damit durch die Messung an dem Temperatursensor und die entsprechende Einstellung der Stellgröße im gesamten Reifeschrank das Überschreiten der kritischen Temperatur vermieden werden kann. Die kritische Temperatur betrifft den Temperaturwert, bei dem die Eiweiße in der Wurst koagulieren (gerinnen). Mit diesem "Abstand" zu dieser kritischen Temperatur gilt dies auch dann, wenn aufgrund der Strömungsverhältnisse die erwärmte Luft unter Umständen noch nicht mit der größten Temperatur am Temperatursensor angekommen ist, sondern sich noch weiter unten befindet und der Temperaturausgleich durch Konvektion noch nicht abgeschlossen ist.

In dem Reifeschrank kann noch eine Ablauföffnung vorhanden sein, über die in dem Reifeschrank entstehendes Kondenswasser ablaufen kann. Diese Ablauföffnung kann mit einem Absperrventil verschlossen sein. Damit kann das Kondenswasser gezielt abgelassen werden, indem dieses Absperrventil geöffnet wird.

Ein Ausführungsbeispiel der Erfindung ist in der Zeichnung dargestellt. Es zeigt dabei:
- Fig. 1:: eine Vorrichtung nach der vorliegenden Erfindung,
- Fig. 2:: eine Prinzipdarstellung eines ansteuerbaren Schließelementes,
- Fig. 3:: eine Prinzipdarstellung des ansteuerbaren Schließelementes als Bestandteil einer Zweipunktregelung mit einer daraus resultierenden Hysterese.

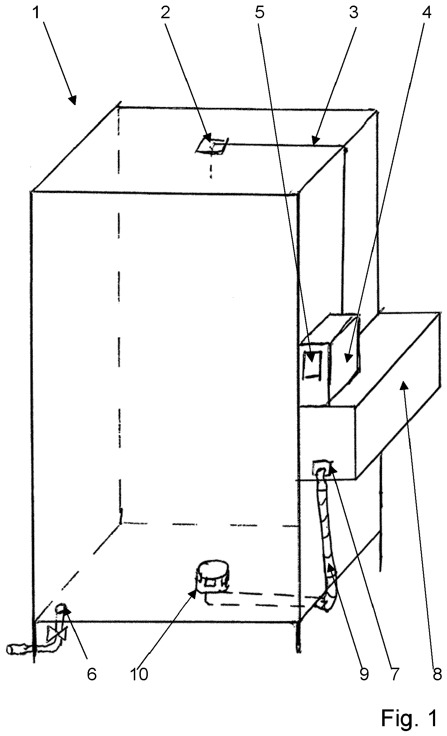

Die Figur 1 zeigt eine Vorrichtung nach der vorliegenden Erfindung. Diese Vorrichtung umfasst einen Reifeschrank 1.

Dieser Reifeschrank 1 weist einen Temperatursensor 2 auf. Es ist zu sehen, dass sich dieser Temperatursensor 2 im oberen Bereich des Reifeschrankes 1 befindet. Wenn die warme Luft in dem Reifeschrank infolge von Konvektion aufsteigt, wird damit erreicht, dass an dem Temperatursensor 2 die Temperatur dieser warmen Luft gemessen wird.

Es ist zu sehen, dass das Signal 3 des Temperatursensors 2 einer Regeleinrichtung 4 zugeführt wird. In der Figur 1 ist eine Sollwertvorgabeeinrichtung 5 zu sehen. Es handelt sich dabei um ein Bedienfeld, an dem eine Sollwertvorgabe für die Temperatur eingestellt werden kann. Diese Sollwertvorgabeeinrichtung 5 kann auch eine Anzeigevorrichtung aufweisen, mittels der die von dem Temperatursensor 2 gemessene Temperatur angezeigt werden kann.

Von der Regeleinrichtung 4 geht eine Signalleitung zu einem ansteuerbaren Schließelement 7. Über diese Signalleitung wird das Ausgabesignal der Regeleinrichtung 4 an das ansteuerbare Schließelement 7 ausgegeben. Über dieses Ausgabesignal wird das ansteuerbare Schließelement 7 geöffnet bzw. geschlossen.

Das ansteuerbare Schließelement 7 befindet sich an dem Ausgang eines Dampferzeugers 8. Dieser Dampferzeuger 8 kann so aufgebaut sein, dass dieser ein Wasserreservoir aufweist sowie eine Heizeinrichtung zur Erwärmung des Wassers in dem Wasserreservoir. Oberhalb des Wasserreservoirs befindet sich ein Aufnahmeraum für den erzeugten Wasserdampf. Bei einem Öffnen des ansteuerbaren Schließelementes 7 strömt der Wasserdampf über die angeschlossene Zuführleitung 9 zu einer Zuführöffnung 10 des Reifeschrankes 1. Für die Einstellung der Regelung kann es vorteilhaft sein, wenn eine Erwärmung des Reifeschrankes 1 unmittelbar durch den Dampferzeuger 8 selbst weitgehend vermieden wird. Die Wärmezufuhr erfolgt dann gezielt über die Zufuhr des Wasserdampfes.

Dazu kann der Dampferzeuger separat und mit einem Abstand zu dem Reifeschrank aufgestellt werden. Wenn der Dampferzeuger unmittelbar an dem Reifeschrank befestigt ist, kann der Dampferzeuger gegenüber dem Reifeschrank thermisch isoliert sein.

Insbesondere wenn die Regelung als Zweipunktregelung mit einer geringen Differenz zwischen dem oberen Wert der Temperatur und dem unteren Wert der Temperatur ausgelegt ist, sind die thermischen Verhältnisse in dem Reifeschrank 1 weitgehend konstant. In diesem Fall ist es nicht unbedingt erforderlich, den Dampferzeuger 8 in besonderer Weise thermisch von dem Reifeschrank 1 zu isolieren. Der Dampferzeuger bewirkt dann eine mehr oder weniger konstante Zufuhr einer Wärmeleistung, die von der Zweipunktregelung - im Sinne einer aufgeschalteten konstanten Störgröße - mit ausgeregelt wird.

Die Zuführleitung 9 verbindet den Ausgang des Dampferzeugers 8 mit der Zuführöffnung 10 des Reifeschrankes 1. Diese Zuführleitung 9 kann als Schlauch ausgebildet sein.

Die Zuführöffnung 10 ist vorteilhaft im unteren Bereich des Reifeschrankes 1 angebracht. Diese Zuführöffnung 10 kann als Düse ausgestaltet sein.

Das ansteuerbare Schließelement 7 ist in dem dargestellten Beispiel am Ausgang des Dampferzeugers 8 angebracht. Das ansteuerbare Schließelement 7 kann allgemein zwischen dem Anschluss der Zuführleitung 9 an dem Dampferzeuger 8 und dem Anschluss der Zuführleitung 9 an der Zuführöffnung 10 des Reifeschrankes 1 angebracht sein oder auch unmittelbar in der Zuführöffnung 10 oder in dem Anschluss der Zuführleitung 9 an dem Dampferzeuger 8.

Das Ausgabesignal der Regeleinrichtung 4 ist das Ansteuersignal des ansteuerbaren Schließelementes 7.

Der Dampferzeuger 8 ist in dem dargestellten Ausführungsbeispiel in einer bestimmten Höhe an dem Reifeschrank 1 befestigt. Dies ist insofern vorteilhaft, als die Zuführleitung 9 dann als Schlauch ausgebildet sein kann. Der Dampferzeuger 8 kann für die Durchführung eines Entkalkungsvorgangs dann von dem Reifeschrank 1 abmontiert werden, so dass der Dampferzeuger 8 bei dem Entkalkungsvorgang gekippt werden kann. Vorteilhaft kann dabei die Zuführleitung 9 angeschlossen bleiben. Zum einen ist die Zuführleitung 9 lang genug, wenn der Dampferzeuger in der bestimmten Höhe angebracht ist. Zum anderen ist die Zuführleitung 9 dann auch flexibel genug, wenn diese Zuführleitung 9 als Schlauch ausgebildet ist. Die bestimmte Höhe, in der der Dampferzeuger 8 an dem Reifeschrank 1 befestigt sein kann, kann beispielsweise so definiert sein, dass die Oberkante des Dampferzeugers 8 in einer Höhe von 70 cm hängt. Auch wenn sich dadurch eine gewisse Länge der Zuführleitung 9 ergibt, werden durch eventuelles Kondenswasser in der Zuführleitung entstandene Bakterien durch die hohen Temperaturen Wasserdampfes abgetötet.

Im Boden des Reifeschrankes 1 ist noch eine Öffnung 6 zu sehen, an die eine Ablaufleitung angeschlossen ist. Die Ablaufleitung kann mit einem Absperrventil - beispielsweise einem Kugelhahn - verschlossen sein, das von Hand geöffnet werden kann. Darüber kann vorteilhaft Kondenswasser abgelassen werden, das sich im Inneren des Reifeschrankes 1 gebildet hat.

Es hat sich gezeigt, dass in diesem Ausführungsbeispiel der Reifeprozess mit einer Dauer von maximal 24 h abgeschlossen ist. Ggf. kann ein Film, der sich eventuell auf der Wurst gebildet hat, abgewaschen werden. Die Wurst ist dann schnittfest und fertig und kann ggf. noch geräuchert werden.

Bei den Wurstwaren kann es sich um Rohwurst handeln, insbesondere um Salami. Es hat sich gezeigt, dass der Reifeprozess lediglich unter Verwendung von Starterkulturen gestartet werden kann. Eine Verwendung von GDL ist nicht notwendig.

Der Reifeschrank 1 kann eine Höhe von 1,70 m aufweisen sowie eine Breite von 1,00 m und Tiefe von 0,750 m. Die Vorderwand kann eine Tür sein, die geöffnet werden kann, um - außer für die Durchführung von Reinigungs- und Wartungsarbeiten - die Wurstwaren in den Reifeschrank einzubringen und auch wieder zu entnehmen. Selbstverständlich ist es auch möglich, den Reifeschrank 1 mit anderen Maßen herzustellen.

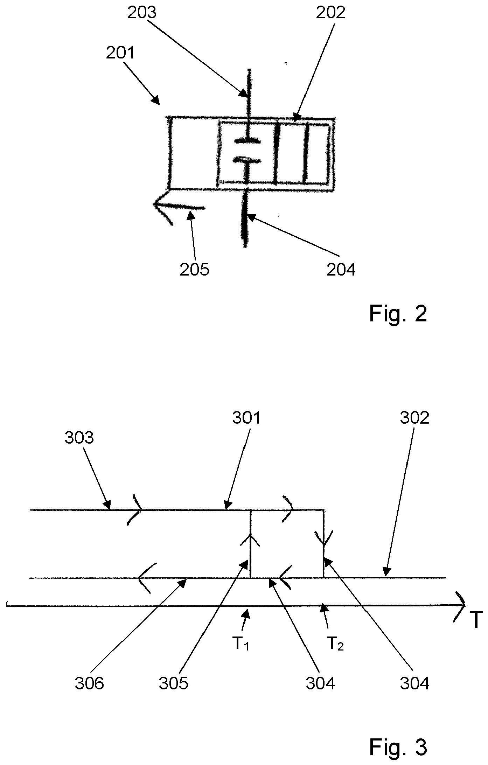

Figur 2 zeigt eine Prinzipdarstellung des ansteuerbaren Schließelementes 7 der Darstellung der Figur 1. Es ist zu sehen, dass das ansteuerbare Schließelement 7 ein 2/2-Ventil 201 sein kann.

Bei dem dargestellten Ventil 201 hat der Ventilkörper 202 zwei Schaltpositionen. Das Ventil 201 ist in der Schaltposition dargestellt, in der das Ventil 201 in der ersten, geschlossenen Betriebsstellung ist. Bei einer Bewegung des Ventilkörpers 202 entsprechend dem Pfeil 205 geht das Ventil 201 in die zweite, geöffneten Betriebsstellung über.

Außerdem hat das Ventil 201 zwei Anschlüsse 203 und 204 als Zuleitung und als Abgang.

Figur 3 zeigt die sich bei der Zweipunktregelung ergebende Hysterese. Es ist die Darstellung der Schaltzustände des ansteuerbaren Schließelementes 7 über der Temperatur zu sehen.

In der Figur 3 entspricht das Niveau 301 dem ansteuerbaren Schließelement 7 in der geöffneten Stellung und das Niveau 302 dem ansteuerbaren Schließelement in der geschlossenen Stellung.

Auf der X-Achse ist die Temperatur aufgetragen, die von dem Temperatursensor 2 gemessen wird.

Beim Start des Reifeprozesses ist das ansteuerbare Schließelement 7 geöffnet. Durch den einströmenden Wasserdampf steigt die Temperatur an, die von dem Temperatursensor 2 gemessen wird. Dies ist durch die Trajektorie 3 dargestellt.

Zunächst steigt bei Beginn des Reifeprozesses die Temperatur an. Der Zustand bewegt sich daher in der Grafik auf der Trajektorie 303 nach rechts.

Bei Erreichen des oberen Wertes der Temperatur (T₂) erfolgt ein Wechsel auf den mit der Bezugsziffer 304 bezeichneten Teil der Trajektorie. Das ansteuerbare Schließelement 7 wird geschlossen und die Temperatur beginnt zu sinken.

Im Idealfall wird die Temperatur T₂ nicht überschritten. Wie erläutert, kann es dennoch passieren, dass die Verteilung der Wärmeenergie in dem Reifeschrank bei einströmendem Wasserdampf noch nicht abgeschlossen ist, so dass - auch bei geschlossenem ansteuerbaren Schließelement 7 - die Temperatur am Temperatursensor 2 noch etwas ansteigt. Das ansteuerbare Schließelement 7 bleibt geschlossen bei Temperaturen, die von dem Temperatursensor 2 gemessen werden und die oberhalb der Temperatur T₂ liegen.

Wenn die von dem Temperatursensor 2 gemessene Temperatur auf den unteren Wert der Temperatur (T₁) gesunken ist, erfolgt ein Wechsel auf den Teil der Trajektorie, der mit der Bezugsziffer 305 bezeichnet ist. Das heißt, dass das ansteuerbare Schließelement 7 geöffnet wird.

Das ansteuerbare Schließelement 7 bleibt geöffnet, bis der obere Wert der Temperatur (T₂) erreicht ist.

Es erfolgt dann wieder ein Übergang auf die Trajektorie 304, auf der bei der Temperatur T₂ das ansteuerbare Schließelement 7 geschlossen wird.

Das ansteuerbare Schließelement 7 bleibt dann wieder geschlossen, bis die Temperatur auf den Wert T₁ gefallen ist.

Solange der Reifeprozess durchgeführt wird, erfolgt durch das Schalten des ansteuerbaren Schließelementes der beschriebene Wechsel zwischen den Trajektorien 304 und 305, wenn die jeweiligen Temperaturen T₁ und T₂ erreicht sind.

Wenn der Reifeprozess abgeschlossen ist, wird die Regeleinrichtung 4 abgeschaltet. Bei geschlossenem ansteuerbaren Schließelement fällt die Temperatur dann unter den Wert T₁, ohne dass eine erneute Öffnung des ansteuerbaren Schließelementes 7 erfolgt. Bei der Temperatur T1 erfolgt also in diesem Fall kein Übergang auf die Trajektorie 305. Die Temperatur sinkt vielmehr bei geschlossenem ansteuerbaren Schließelement 7 weiter ab. Dies entspricht der Trajektorie 306.

## Patentansprüche

1. Verfahren zur Durchführung eines Reifeprozesses von Wurstwaren, wobei ein Reifeschrank (1) und ein Dampferzeuger (8) verwendet wird,
➢ wobei sich die Wurstwaren zur Durchführung des Reifeprozesses in dem Reifeschrank (1) befinden,
➢ wobei der Reifeschrank (1) mit dem Dampferzeuger (8) derart gekoppelt ist (9, 7), dass eine Dampfzufuhr in den Reifeschrank (1) erfolgen kann, indem von dem Dampferzeuger (8) erzeugter Wasserdampf in den Reifeschrank (1) einströmen kann,
➢ wobei der Reifeschrank (1) einen Temperatursensor (2) aufweist zur Messung der Temperatur im Inneren des Reifeschrankes,
➢ wobei die Durchführung des Reifeprozesses geregelt wird,
**dadurch gekennzeichnet**,
➢ dass der Dampferzeuger (8) außerhalb des Reifeschrankes (1) angeordnet ist,
➢ dass die Stellgröße der Regelung die Zufuhr von Wasserdampf aus dem Dampferzeuger (8) in den Reifeschrank (1) ist,
➢ dass die Führungsgröße der Regelung ein Sollwert der Temperatur des Temperatursensors (2) ist,
➢ wobei bei einem oberen Wert als Messwert des Temperatursensors (2) die Dampfzufuhr in den Reifeschrank (1) unterbrochen wird und
➢ wobei bei einem unteren Wert als Messwert des Temperatursensors (2) die Dampfzufuhr in den Reifeschrank (1) vollständig geöffnet wird.

2. Verfahren nach Anspruch 1,
**dadurch gekennzeichnet,**
**dass** die Regelung eine Zweipunktregelung ist (201, 301).

3. Verfahren nach Anspruch 1 oder 2,
**dadurch gekennzeichnet,**
**dass** der Dampferzeuger (8) aus einem Gehäuse besteht,
➢ wobei sich in dem Gehäuse ein Wasserreservoir befindet,
➢ wobei eine Heizvorrichtung vorhanden ist, über die das Wasser in dem Wasserreservoir zur Durchführung des Reifeprozesses auf eine Temperatur erhitzt wird, bei der eine Menge an Wasserdampf pro Zeiteinheit entsteht, die ausreichend ist für die Temperaturregelung des Reifeprozesses,
➢ wobei das Gehäuse oberhalb des Wasserreservoirs einen Aufnahmeraum für den entstehenden Wasserdampf aufweist,
➢ wobei der Aufnahmeraum zur Durchführung des Reifeprozesses mit einer Zuführöffnung (10) in dem Reifeschrank (1) verbunden ist (9, 7).

4. Verfahren nach einem der Ansprüche 1 bis 3,
**dadurch gekennzeichnet,**
**dass** die Wurstwaren in dem Reifeschrank (1) während der Durchführung des Reifeprozesses freihängend gelagert sind.

5. Vorrichtung zur Durchführung des Verfahrens nach einem der Ansprüche 1 bis 4,
**dadurch gekennzeichnet**,
➢ dass die Vorrichtung einen Reifeschrank (1) aufweist zur Durchführung eines Reifeprozesses von Wurstwaren,
➢ dass die Vorrichtung einen Dampferzeuger (8) aufweist zur Erzeugung von Wasserdampf,
➢ dass dieser Dampferzeuger (8) außerhalb des Reifeschrankes (1) angeordnet ist,
➢ dass der Dampferzeuger (8) eine Zuführleitung (9) aufweist, die von dem Dampferzeuger (8) abgeht zu einer Zuführöffnung (10) des Reifeschrankes (1),
➢ dass ein ansteuerbares Schließelement (7) mit wenigstens zwei Betriebsstellungen vorhanden ist,
➢ wobei in einer ersten, geschlossenen Betriebsstellung des Schließelementes (7) die Dampfzufuhr von dem Dampferzeuger (8) in den Reifeschrank (1) gesperrt ist und
➢ wobei in einer zweiten, geöffneten Betriebsstellung des Schließelementes (7) die Dampfzufuhr von dem Dampferzeuger (8) in den Reifeschrank (1) geöffnet ist,
➢ dass dem Reifeschrank (1) ein Temperatursensor (2) zugeordnet ist zur Messung der Temperatur im Inneren des Reifeschrankes (1),
➢ dass die Vorrichtung eine Regeleinrichtung (4) aufweist,
➢ wobei der Regeleinrichtung (4) als Eingangssignal das Signal (3) des Temperatursensors (2) zugeführt wird,
➢ wobei die Regeleinrichtung (4) so ausgestaltet ist, dass in der Regeleinrichtung (4) dieses Eingangssignal mit einem Sollwert verglichen wird,
➢ wobei die Regeleinrichtung (4) eine Signalausgabeeinheit aufweist, deren Ausgabesignal (6) abhängig von dem Vergleich des Signals des Temperatursensors (2) mit dem Sollwert erzeugt wird,
und
➢ dass das Ausgabesignal der Regeleinrichtung (4) dem ansteuerbaren Schließelement (7) als Ansteuersignal des ansteuerbaren Schließelementes (7) zugeführt wird.

6. Vorrichtung nach Anspruch 5,
**dadurch gekennzeichnet,**
**dass** der Regeleinrichtung (4) eine Sollwertvorgabeeinrichtung (5) zugeordnet ist, durch die eine Sollwertvorgabe einstellbar ist,
➢ wobei der Regeleinrichtung (4) von der Sollwertvorgabeeinrichtung (5) ein dieser Sollwertvorgabe entsprechendes Eingangssignal zugeführt wird,
➢ wobei die Regeleinrichtung (4) so ausgestaltet ist, dass aus dieser Sollwertvorgabe ein oder mehrere Sollwerte abgeleitet werden zur Durchführung der Regelung des Reifeprozesses.
